**Europäisches Patentamt**

**European Patent Office**

**Office européen des brevets**

(19)

(11) Veröffentlichungsnummer: **0 312 935**
**A1**

(12) # EUROPÄISCHE PATENTANMELDUNG

(21) Anmeldenummer: **88117159.9**

(22) Anmeldetag: **14.10.88**

(51) Int. Cl.⁴: **A61C 8/00**

(30) Priorität: **16.10.87 BG 81453/87**

(43) Veröffentlichungstag der Anmeldung:
**26.04.89 Patentblatt 89/17**

(84) Benannte Vertragsstaaten:
**AT CH DE ES FR GB GR LI SE**

(71) Anmelder: **CENTAR PO SUBNA
IMPLANTOLOGIA I PROTESIRANE
"AVANGARD"
Boul. G. Dimitrov 191
1233 Sofia(BG)**

(72) Erfinder: **Bulakiev, Georgi Kirilov, Dr.
Komplex Druzba Block 26-2
BG-1592 Sofia(BG)**

(74) Vertreter: **Ebbinghaus, Dieter et al
Patentanwälte v. Füner, Ebbinghaus, Finck
Mariahilfplatz 2 & 3
D-8000 München 90(DE)**

(54) **Zahnimplantat.**

(57) Ein Zahnimplantat besteht aus einem Zahneinsatz (1) mit einem darin angeordneten Grundloch mit Innengewinde. Am Boden des Grundlochs ist eine elastische Büchse (2) montiert, in die ein Stellbolzen (3) geschraubt ist. An einem kegelförmigen Abschnitt (8) des Stellbolzens (3) liegt ein Dichtungsring (4) an, der an einer Stellbüchse (5) befestigt ist. Diese ragt über die Stirn des Zahneinsatzes (1) hinaus. Auf die Stellbüchse (5) ist eine Distanzscheibe (6) geschraubt. An der Distanzscheibe (6) liegt eine auf den Stellbolzen (3) geschraubte Superstruktur (7) an.

Das Zahnimplantat ist einfach aufgebaut, ist einfach einzusetzen und ermöglicht eine genaue Einstellung und Übertragung des Kaudruckes.

# ZAHNIMPLANTAT

Die Erfindung bezieht sich auf ein Zahnimplantat, bei dem der Kaudruck übertragbar und einstellbar ist, zur Anwendung in der orthopädischen Stomatologie.

Aus der DE-OS 35 31 389 ist bereits ein Zahnimplantat bekannt, das aus einem Zahneinsatz und einem in diesem ausgearbeiteten Grundloch besteht. In das Innengewinde des Grundlochs des Zahneinsatzes ist ein Stellbolzen eingeschraubt, der von einer Distanzscheibe umschlossen ist. Die Distanzscheibe reicht bis an die Stirn des Zahneinsatzes heran. Am oberen Ende des Stellbolzens ist eine Superstruktur befestigt.

Das bekannte Zahnimplantat ist verhältnismäßig kompliziet aufgebaut. Ferner kann der Kaudruck nicht in der Tiefe des Kiefers aufgenommen und nicht eingestellt werden.

Der Erfindung liegt die Aufgabe zugrunde, ein einfach aufgebautes Zahnimplantat zu schaffen, das keine kompli zierte Operationstechnik benötigt und daneben eine dosierte Übertragung des Kaudrucks und eine kontrollierte Übertragung in horizontaler und vertikaler Richtung in der Tiefe des Implantatsitzes gewährleistet.

Diese Aufgabe wird erfindungsgemäß durch ein Zahnimplantat gelöst, das einen Zahneinsatz mit einem darin ausgearbeiteten Grundloch mit Innengewinde aufweist. Im Grundloch ist ein Stellbolzen montiert, der von einer bis an die Stirn des Zahneinsatzes reichenden Distanzscheibe umfasst ist. An der Distanzscheibe liegt eine Superstruktur an, die auf dem Stellbolzen befestigt ist. Der Stellbolzen weist erfindungsgemäß einen kegelartigen Abschnitt auf, der durch einen Dichtungsring gestützt ist. Der Dichtungsring ist an einer Stellbüchse befestigt, die in den oberen Teil des Grundloches des Zahneinsatzes geschraubt ist. Die Stellbüchse ragt aus dem Zahneinsatz heraus; auf die Stellbüchse ist eine Distanzscheibe geschraubt, an die die Superstruktur heranreicht. Am Boden des Grundloches des Zahneinsatzes ist eine elastische Büchse befestigt, in die der Stellbolzen eingeschraubt ist.

Das erfindungsgemäße Zahnimplantat hat einen einfachen Aufbau und ermöglicht eine einfache Operationstechnik. Der Kaudruck kann sowohl in vertikaler als auch in horizontaler Richtung genau eingestellt werden. Vorteilhaft ist ferner, daß der Kaudruck tief im Zaheinsatz aufgenommen wird.

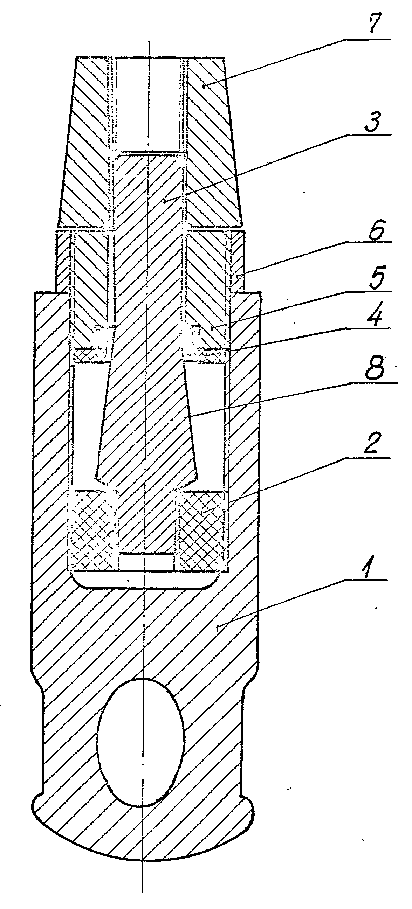

Ein Ausführungsbeispiel des erfindungsgemäßen Zahnimplantats wird anhand der Zeichnung erläutert, die einen Längsschnitt des Zahnimplantats in Arbeitsstellung zeigt.

In den Zahneinsatz 1 ist ein Grund- oder Sackloch mit Innengewinde gebohrt. Am Boden des Grundloches ist eine elastische Büchse montiert, in deren Öffnung ein Innengewinde geschnitten ist. In die elastische Büchse 2 ist ein Stellbolzen 3 geschraubt, der einen kegelförmigen Abschnitt 8 aufweist. Am kegelartigen Abschnitt 8 liegt ein Dichtungsring 4 an, der in einer in den oberen Teil des Grundlochs eingeschraubten Stellbüchse 5 befestigt ist. Die Stellbüchse 5 ragt über die Stirn des Zahneinsatzes 1 hinaus. Auf den Zahneinsatz 1 ist eine Distanzscheibe 6 geschraubt. An der Distanzscheibe 6 liegt eine auf den Stellbolzen 3 geschraubte Superstruktur 7 an.

Das Zahnimplantat wird auf folgende Weise montiert. Unter lokaler Anästhesie wird ein schleimhautperistales Lambo mit Abmessungen ausgearbeitet, die eine freie Arbeit im Knochen gewährleisten. Alte Zahnwurzelreste müssen entfernt und der Ort gut gereinigt werden. Unter ununterbrochener Kühlung mit einer sterilen physiologischen Lösung wird eine Bohrung angebracht, wonach der Ort zur Befestigung des Zahneinsatzes 1 ausgeweitet wird. Unmittelbar nach der notwendigen Vorbereitung der Öffnung zum Fixieren des Implantats wird dieses in bekannter Weise montiert, wobei das Grundloch des Zahneinsatzes mittels Schrauben bis zum Anschlag eines zusätzlichen geeigneten Bolzens verstopft wird. Das schleimhautperistale Lambo wird vernäht. In dieser Lage verbleibt der Zahneinsatz 1, und zwar etwa 3 bis 4 Monate für den Unter- und etwa 4 bis 6 Monate für den Oberkiefer. Nachdem sich der Operateur überzeugt hat, daß der Zahneinsatz 1 fest verwachsen ist, beginnt er mit dem Prothesieren und der Montage des Zahnimplantats. Es wird eine runde Öffnung über dem den Zahneinsatz 1 verstopfenden Zusatzbolzen gebildet.

Danach wird dieser durch Herausschrauben und Drücken unter Festhalten des Zahneinsatzes 1 entfernt.

Die elastische Büchse 2 wird bis zum Anschlag in das Grundloch des Zahneinsatzes 1 geschraubt, während die Stellbüchse 5 bis zum Anschlag an den Verdichtungsring 4 am kegelförmigen Abschnitt 8 geschraubt wird.

Die Sicherheitsfixierung der Stellbüchse 5 erfolgt durch Festziehen der Distanzscheibe 6 nach mehreren Messungen der Größe des Kaudruckes, wobei für jedes konkrete Implantat die Beweglichkeit des Nachbar- und des Gegenzahnes oder eines sich in einer Brückenkonstruktion befindenden Zahnes berücksichtigt wird. Die Montage der Distanzscheibe 6 erfolgt unter Berücksichtigung der Dicke der Schleimhaut, so daß sie immer über die Schleimhaut hinausragt. Die Prothesierung erfolgt dann nach in der Stomatologie bekannten Routineverfahren. In diesem Fall werden die Superstruktur 7 auf dem oberen Ende des Stellbolzens 3 und die Krone montiert.

## Ansprüche

Zahnimplantat mit einem Zahneinsatz (1) und einem darin ausgebildeten Grundloch mit Gewinde und einem daran befestigten Stellbolzen (3), der von einer bis an die Stirn des Zahneinsatzes (1) heranreichenden Distanzscheibe (6) umfasst ist, wobei an den Stellbolzen (3) eine Superstruktur (7) angeschraubt ist, dadurch **gekennzeichnet,** daß am Boden des Grundloches des Zahneinsatzes (1) eine elastische Büchse (2) befestigt ist, in die der Stellbolzen (3) geschraubt ist, daß der Stellbolzen (3) einen kegelförmigen Abschnitt (8) aufweist, an dem ein Dichtungsring (4) anliegt, der an einer in das Grundloch des Zahneinsatzes (1) geschraubten Stellbüchse (5) angebracht ist, daß die Stellbüchse (5) über den Zahneinsatz (1) hinausragt und daß die Distanzscheibe (6) auf die Stellbüchse (5) aufgeschraubt ist und die Superstruktur (7) bis an die Distanzscheibe (6) heranreicht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B- 2413 883 (KOCH) <br> * Anspruch 1; Spalte 2, Zeilen 15 - 56; Figur 1 * <br> --- | 1 | A 61 C 8/00 |
| A | EP-A-0 083 028 (FRAUNHOFER-GESELLSCHAFT ZUR FOERDERUNG DER ANGEWANDTEN FORSCHUNG) <br> * Seite 5, Zeilen 24 - 36; Seite 6, Zeile 33 - Seite 11, Zeile 22; Figuren 5 - 10 * <br> --- | 1 | |
| A | EP-A-0 158 333 (W.L. KOCH) <br> * Seite 7, Zeilen 11 - 27; Figur 2 * <br> --- | 1 | |
| A | EP-A-0 180 247 (IMPLANTO-LOCK) <br> * Seite 2, Zeile 24 - Seite 12, Zeile 2 * <br> --- | 1 | |
| D,A | DE-A-3 531 389 (KIRSCH) <br> * Figuren 1 - 4 * <br> ----- | 1 | |

**RECHERCHIERTE SACHGEBIETE (Int. Cl.4)**

A 61 C 8/00
A 61 C 13/00

Der vorliegende Recherchenbericht wurde für alle Patentansprüche erstellt

| Recherchenort | Abschlußdatum der Recherche | Prüfer |
|---|---|---|
| BERLIN | 03-01-1989 | SIMON J J P |